(19) **Europäisches Patentamt / European Patent Office / Office européen des brevets**

(11) **EP 4 144 427 A1**

(12) **EUROPEAN PATENT APPLICATION**
published in accordance with Art. 153(4) EPC

(43) Date of publication:
**08.03.2023 Bulletin 2023/10**

(21) Application number: **21796645.6**

(22) Date of filing: **02.04.2021**

(51) International Patent Classification (IPC):
**B01D 39/16** (2006.01)   **B01D 29/07** (2006.01)
**B01D 29/21** (2006.01)   **D04H 1/541** (2012.01)

(52) Cooperative Patent Classification (CPC):
**B01D 29/07; B01D 29/21; B01D 39/16; D04H 1/541**

(86) International application number:
**PCT/JP2021/014341**

(87) International publication number:
**WO 2021/220720 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2020 JP 2020080425**

(71) Applicants:
- **JNC Corporation**
  **Chiyoda-ku**
  **Tokyo 100-8105 (JP)**
- **JNC FILTER CO., LTD.**
  **Osaka-shi**
  **Osaka 530-6108 (JP)**

(72) Inventors:
- **MINEO Ryota**
  **Moriyama-shi, Shiga 524-0001 (JP)**
- **TANAKA Akitomo**
  **Moriyama-shi, Shiga 524-0001 (JP)**
- **NAKAMURA Yoshihiro**
  **Moriyama-shi, Shiga 524-0001 (JP)**
- **YAMAGUCHI Osamu**
  **Moriyama-shi, Shiga 524-0001 (JP)**

(74) Representative: **Becker, Eberhard**
**Becker Kurig & Partner**
**Patentanwälte mbB**
**Bavariastraße 7**
**80336 München (DE)**

(54) **DEPTH FILTER**

(57)   The present invention provides a depth filter which contains fine particles and coarse particles, and which exhibits excellent filtration accuracy with respect to a high concentration fluid and/or a high viscosity fluid. This depth filter enables filtration for a long period of time, while maintaining a low filtration pressure.

The present invention is a depth filter which is obtained by winding a fiber sheet into a cylinder, and which comprises a pre-filtration layer and a microfiltration layer; the pre-filtration layer and the microfiltration layer are formed of a fiber sheet; the fiber sheet is composed of a nonwoven fabric or a web; the average fiber diameter of the fiber sheet continuously decreases from the pre-filtration layer toward the microfiltration layer; and the average weight per square meter of the fiber sheet continuously decreases from the pre-filtration layer toward the microfiltration layer.

**Description**

[Technical Field]

The present invention relates to a depth filter for filtering a fluid containing fine particles.

[Background Art]

Recently, due to the demand for higher performance in electronic devices, electronic components have been required to be miniaturized. Therefore, each member tends to be thinned and multilayered. Taking a multilayer ceramic capacitor (MLCC) as an example, in order to make a ceramic sheet thinner, ultrafine nickel powder for an internal electrode or barium titanate for a dielectric tends to have a smaller particle size. On the other hand, regarding polishing materials such as a CMP slurry, when polishing a base material and films of respective layers, colloidal silica, ceria particles, and the like tend to have smaller particle sizes in order to remove coarse particles which may cause scratches and to control a polishing speed.

The presence of coarse particles contained in a slurry for an MLCC is not preferable for thinning and multilayering of a multilayer ceramic capacitor. In addition, in polishing of a semiconductor device using a CMP slurry, coarse particles may cause scratches or the like. Therefore, it is desirable to remove them as much as possible.

Regarding these latest materials, sizes considered as those of coarse particles have become smaller in accordance with microminiaturization of particles used so that a filter for high-precision filtration is required when such a slurry is filtered.

Generally, a pleated filter is applied to filtration of submicron-sized fine particles. However, when a concentration of a slurry is relatively high and a viscosity thereof is high, pressure resistance performance is required at the time of filtration. Therefore, high-precision filtration using a pleated filter, in which a slurry is diluted with water or the like, has been examined.

However, in a post-process, costs for waste water increase according to the amount of dilution water. Moreover, when there is a drying step, there is a burden such as a lengthened time, resulting in a problem of increase in manufacturing costs. Therefore, it is desirable to have a filter which can perform filtration in a state of a high concentration and a high viscosity.

Meanwhile, a depth filter is suitable for filtration of high concentration and high viscosity.

A cylindrical depth filter is made by winding a nonwoven fabric around a core material or the like and is characterized by capturing filtration objects throughout the entire thickness of a filter medium, and thus it can capture filtration objects having smaller sizes on account of a nonwoven fabric including fine fibers wound therearound.

However, although depth filters having a nonwoven fabric or a web including ultrafine fibers wound therearound have a high filtration precision, a pressure during liquid permeation tends to be high. Moreover, as a filtration pressure increases, a so-called push-out phenomenon, in which particles collected in fiber gaps (particularly irregular particles such as gel particles and particle aggregates) leak out to a filtrate side such that they thrust into holes of a filter medium, occurs. Therefore, it is desirable that the filters have a high precision and a low filtration pressure.

In order to cope with such situations, multilayer-type depth filters in which a nonwoven fabric composed of coarse fibers are wound therearound on the outward side and ultrafine fibers are wound therearound on the inward side have been proposed. In such multilayer-type depth filters, coarse particles are captured on the outward side and particles or gel finer than coarse particles are captured on the inward side so that high-precision filtration is performed while a rise in filtration pressure is relatively curbed.

However, in multilayer-type depth filters, depending on the distribution of particle sizes of a slurry, there are many cases in which clogging occurs between layers. As a result, a filtration service life is shortened. Therefore, it is often difficult for a user to select a filter satisfying having both a certain filtration precision and a filtration service life.

In contrast, a depth filter of which a fiber diameter continuously changes has also been proposed (for example, refer to Patent Literature 1). In a cylindrical depth filter, when a fluid flows from the outward side to the inward side, the fiber diameter continuously changes from a thick part such that it becomes smaller, and a fiber diameter gradient is provided in a filter medium. Generally, regarding capturing of particles in a filter medium, coarse particles are captured at a part having a coarse fiber diameter and fine particles are captured at a part having a fine fiber diameter, that is, filtration objects are captured through depth filtration. Therefore, high-precision filtration can be performed while a rise in filtration pressure is curbed.

However, for a slurry having microminiaturized particles in recent electronic devices and the like, it is difficult to carry out high-precision filtration with a high flow rate and a low filtration pressure even with a depth filter of which a fiber diameter continuously changes. As a reason for this, it is conceivable that when a filter medium is designed with emphasis on capturing submicron-sized particles, the fiber diameter on an upstream side of filtration is unlikely to be thick even if a fiber diameter gradient is provided so that the fiber diameter gradient in the filter medium is small and as a result, many particles are captured on a surface side. In addition, Patent Literature 1 attempts to improve the performance of capturing fine particles by inserting a consolidated nonwoven fabric into a filter medium. However, a filtration time is often shortened due to a high filtration pressure. Moreover, the filtration pressure quickly rises, and a phenomenon such as a push-out phenomenon is likely to occur. Consequently, it is difficult to retain the performance of capturing fine particles for a long period of time. Particularly, regarding a guide for filter replacement, when coarse particles no longer flow out, it implies a criterion for filter replacement. Therefore, the filtration service life is important while high precision is maintained in a process in which the filtration pressure rises.

As described above, various improvements have been made to filters. However, while the numerical value of coarse particles (LPC) also becomes smaller as particles in a slurry become smaller, depth filters having desired high filtration precision and a high flow rate and enabling filtration for a long period of time have not been obtained yet.

Particularly, regarding a slurry of a multilayer ceramic capacitor, the fact that filtration can be performed at a high solid concentration makes it possible to increase a processing amount per batch in a step of dispersing fine particles, which leads to shortening of a drying time. In the foregoing conditions of a filtration liquid, the filtration pressure increases and filtration objects captured in a filter medium are pushed out so that coarse particles flow out to the filtrate side and intended filtration cannot be achieved for the present.

[Citation List]

[Patent Literature]

[Patent Literature 1]
PCT International Publication No. WO1998/013123

[Summary of Invention]

[Technical Problem]

In consideration of the foregoing circumstances, the present invention aims to provide a depth filter which exhibits excellent filtration precision with respect to a fluid containing fine particles and coarse particles, and which enables filtration for a long period of time, while maintaining a low filtration pressure.

[Solution to Problem]

While working on the foregoing problems, the inventors have found that a filtration pressure can be regulated to be at a low level while having a high flow rate and high filtration precision can be retained by changing a fiber diameter such that it continuously becomes smaller so as to increase a fiber diameter gradient and changing a weight per square meter such that it continuously decreases between filter medium layers from a pre-filtration layer to a microfiltration layer for a fiber sheet wound around a filter.

That is, the present invention has the following constitutions.

[1] The present invention provides a depth filter which is obtained by winding a fiber sheet into a cylinder, and which comprises a pre-filtration layer and a microfiltration layer. The pre-filtration layer and the microfiltration layer are formed of a fiber sheet. The fiber sheet is composed of a nonwoven fabric or a web. The average fiber diameter of the fiber sheet continuously decreases from the pre-filtration layer toward the microfiltration layer, and the average weight per square meter of the fiber sheet continuously decreases from the pre-filtration layer toward the microfiltration layer.

[2] In the depth filter according to [1], the pre-filtration layer is disposed in an outermost circumferential part of the cylinder, the microfiltration layer is disposed in an inner circumferential part of the cylinder, the average fiber diameter continuously decreases from the pre-filtration layer toward the microfiltration layer, the average weights per square meter of the fiber sheets continuously decrease, and the average fiber diameter ratios are five times or greater.

[3] In the depth filter according to [2], a support layer is disposed closer to the inner circumferential part than the microfiltration layer.

[4] In the depth filter according to any one of [1] to [3], the average fiber diameter of the pre-filtration layer is 5 to 100 $\mu$m, and the average fiber diameter of the microfiltration layer is 0.1 to 10 $\mu$m.

[5] In the depth filter according to any one of [1] to [4], a fiber sheet having a weight per square meter of 20 g/m$^2$ or smaller is included.

[6] In the depth filter according to any one of [1] to [5], the fiber sheet is composed of a nonwoven fabric, the nonwoven fabric is composed of a low-melting point fiber and a high-melting point fiber, and an intersection between the low-melting point fiber and the high-melting point fiber is heat-fused.

[7] In the depth filter according to [6], a melting point difference between the low-melting point fiber and the high-melting point fiber is 10°C or greater, the low-melting point fiber is composed of a propylene copolymer, and the high-melting point fiber is composed of polypropylene.

[8] In the depth filter according to any one of [1] to [7], the fiber sheet is heat-fused between layers of the fiber sheet.

[9] In the depth filter according to [3], the weight per square meter and the fiber diameter sequentially decrease from the outermost circumferential part toward the microfiltration layer and sequentially increase along a central part from the microfiltration layer.

[Advantageous Effects of Invention]

According to the present invention, it is possible to provide a filter which can block coarse particles at a low filtration pressure and a high flow rate for a relatively long period of time, which has an excellent pressure resistance performance, and in which clogging is unlikely to occur with respect to a fluid containing fine particles and coarse particles.

[Brief Description of Drawings]

Fig. 1 is a graph showing results of water permeation tests of depth filters of Examples of the present invention and Comparative Examples.

Fig. 2 is a graph showing measurement results of collection efficiency of the depth filters of Examples of the present invention and Comparative Examples.

Fig. 3 is a graph showing results of particle capturing rates of the depth filters of Examples of the present invention and Comparative Examples at filtration times.

Fig. 4 is another graph showing results of particle capturing rates of the depth filters of Examples of the present invention and Comparative Examples at filtration times.

[Description of Embodiment]

A depth filter of the present invention is formed into a cylinder by heat-fusing and winding a fiber sheet obtained by a melt blowing method or the like around a core material.

In the depth filter of the present invention, a pre-filtration layer and a microfiltration layer are formed using fiber sheets, and the fiber sheets are composed of a nonwoven fabric or a web. The average fiber diameter of the fiber sheet continuously decreases from the pre-filtration layer toward the microfiltration layer, and the average weight per square meter continuously decreases.

The pre-filtration layer is a part which is installed on the upstream side of filtration and captures coarse particles. The microfiltration layer is a part which is installed on the downstream side of filtration and captures fine particles or gel particles which are not captured by the pre-filtration layer. For example, when a nonwoven fabric is used as a fiber sheet, in the depth filter of the present invention, the fiber diameter of the nonwoven fabric is large in the pre-filtration layer, the fiber diameter continuously changes to be small from the upstream side toward the downstream side, and the fiber diameter becomes the smallest in the microfiltration layer.

Moreover, as necessary, a support layer can be provided on the downstream side of the microfiltration layer. The support layer can be formed by sequentially reducing the weight per square meter and the fiber diameter from an outermost circumferential part toward the microfiltration layer and sequentially increasing the weight per square meter and the fiber diameter from the microfiltration layer along a central part.

In the depth filter of the present invention, the pre-filtration layer is disposed in the outermost circumferential part of the cylinder, the microfiltration layer is disposed in an inner circumferential part of the cylinder, the average fiber diameter of the fiber sheet such as a nonwoven fabric continuously decreases from the pre-filtration layer toward the microfiltration layer, the average weight per square meter of the fiber sheet continuously decreases, and the average fiber diameter ratio can be five times or greater. In this manner, when the pre-filtration layer and the microfiltration layer are disposed, as necessary, the support layer can be further provided closer to the inner circumferential part than the microfiltration layer. When the support layer is provided, the weight per square meter of the nonwoven fabric continuously changes such that it increases from the microfiltration layer toward the support layer.

Regarding the average fiber diameter ratio, it is preferable that the average fiber diameter ratio between the layer in which the average fiber diameter in the pre-filtration layer is maximized and the layer in which the average fiber diameter in the microfiltration layer is minimized (the average fiber diameter of the layer in which the average fiber diameter in the pre-filtration layer is maximized / the average fiber diameter of the layer in which the average fiber diameter in the microfiltration layer is minimized) be five times or greater. In addition, the fiber diameter gradually changes between the pre-filtration layer and the microfiltration layer within a range between the largest fiber diameter of the pre-filtration layer and the smallest fiber diameter of the microfiltration layer.

Since the fiber diameter gradient increases from the pre-filtration layer toward the microfiltration layer, a slurry having a wide distribution of particle sizes can be efficiently filtered throughout the entire thickness of a filter medium. Due to the gradual changes in which the fiber diameter becomes smaller and the weight per square meter decreases between the filter medium layers from the pre-filtration layer to the microfiltration layer, a pressure loss is unlikely to occur, a fluid smoothly flows, and coarse particles are efficiently subjected to depth filtration between the filter medium layers. Moreover, since the filtration pressure is low, push-out is unlikely to occur. As a result, high filtration precision is likely to be maintained for a long period of time.

The depth filter of the present invention having the structure described above can be manufactured through spinning by a melt blowing method. A melt blowing method is a method for obtaining an ultrafine fiber web by blasting a melted thermoplastic resin pushed out through spinning holes in a machine direction or a length direction on a collection conveyor net or a rotating hollow mandril by means of high-temperature high-speed gas spouting from an area around the spinning holes. At this time, desired change can be imparted to the fiber diameter and the weight per square meter from the pre-filtration layer to the microfiltration layer by continuously and simultaneously changing spinning conditions such as the amount of resin (discharging amount) discharged through the spinning holes and a jetting speed (or a hot blast pressure) of a blowing airflow.

In the pre-filtration layer, the fibers can be made thick and the weight per square meter can be increased by increasing the discharging amount and reducing the hot blast pressure. In a process from the pre-filtration layer to the microfiltration layer, the fibers can be made gradually thin and the weight per square meter of the nonwoven fabric can be decreased by gradually reducing the discharging amount and increasing the hot blast pressure at the same time. In the microfiltration layer, the fiber diameter can be minimized and the weight per square meter of the nonwoven fabric can also be minimized in the depth filter by uniformly retaining the hot blast pressure and the discharging amount.

The fibers can be made thick and the weight per square meter can be increased by reducing the hot blast pressure and increasing the discharging amount from the microfiltration layer to the support layer. In the support layer, the hot blast pressure and the discharging amount can also be made uniform for a moment. Due to the depth structure which has been made as described above, in the pre-filtration layer, it is possible to capture foreign matters having relatively large sizes, such as coarse particles. In addition, as the fiber diameter of the pre-filtration layer increases, liquid permeability and water permeability increase and a pressure loss at the time of liquid permeation can be regulated to be at a low level.

The fiber diameter gradually becomes small between the layers from the pre-filtration layer to the microfiltration layer, and the weight per square meter also gradually decreases. Therefore, although the pore diameter becomes small, a pressure loss at the time of liquid permeation can be regulated to be at a low level. As a result, an effect of curbing a rise in filtration pressure can be achieved in a process in which filtration objects are subjected to depth filtration. Therefore, it is assumed that fine filtration objects are captured and push-out is prevented.

In the pre-filtration layer, the range of 5 to 100 $\mu$m can be utilized as the average fiber diameter, which is preferably 7 to 50 $\mu$m and is more preferably 10 to 30 $\mu$m. If the average fiber diameter is 5 $\mu$m or larger, it is preferable because there is no excessive pressure loss compared to the filtration precision. In addition, if the average fiber diameter is 100 $\mu$m or smaller, it is preferable because huge particles can be captured by the pre-filtration layer. The range of 10 to 100 g/m$^2$ can be utilized as the weight per square meter, which is preferably 20 to 80 g/m$^2$ and is more preferably 30 to 60 g/m$^2$. If the weight per square meter is 10 g/m$^2$ or greater, it is preferable because a pre-filtration tank can have a sufficient rigidity. In addition, if the weight per square meter is 100 g/m$^2$ or smaller, it is preferable because the inside of the nonwoven fabric can also be sufficiently heated at the time of heat treatment.

In the microfiltration layer, the range of 0.1 to 10 $\mu$m can be utilized as the average fiber diameter, which is preferably 0.3 to 5 $\mu$m and is more preferably 0.4 to 2 $\mu$m. If the average fiber diameter is 0.1 $\mu$m or larger, it is preferable because the fiber strength of the microfiltration layer can be sufficiently retained. In addition, if the average fiber diameter is 10 $\mu$m or smaller, it is preferable because particles having a size required for the microfiltration layer can be captured. The range of 1 to 40 g/m$^2$ can be utilized as the weight per square meter, which is preferably 3 to 30 g/m$^2$ and is more preferably 5 to 20 g/m$^2$. If the weight per square meter is 1 g/m$^2$ or greater, it is preferable because a load required in a succeeding winding step can be applied. In addition, if the weight per square meter is 40 g/m$^2$ or smaller, it is preferable because a situation in which fly generation occurs due to melt blowing and the weight per square meter of the nonwoven fabric becomes unstable can be avoided.

In addition, the ratio between the average weight per square meter near the largest weight per square meter of the pre-filtration layer and the average weight per square meter near the smallest weight per square meter of the microfiltration layer is 1.2 times or greater, preferably 1.5 times or greater, more preferably 1.8 times or greater, and further preferably 2 times or greater. Within this range, the effects of the present invention can be obtained.

In the depth filter of the present invention, a support layer is used as necessary. In the filter medium constituting the depth filter of the present invention, the support layer is provided on the downstream side of the microfiltration layer. The support layer is provided to retain the shape of the microfiltration layer or prevent the filter medium from falling off from the microfiltration layer. However, when the microfiltration layer has sufficient shape retaining properties, a support body such as a separately prepared core material may be used in order to retain the shape of the microfiltration layer, and when there is no possibility that the filter medium falls off from the microfiltration layer, the support layer may not be formed. The same nonwoven fabric as the nonwoven fabric constituting the support layer may be used as the nonwoven fabric constituting the pre-filtration layer, or a non-woven fiber aggregate such as a spunbonded non-woven fabric having a higher strength may be used. The fiber diameter of a melt-blown nonwoven fabric is not uniform and is usually distributed with a certain width. However, in the case of these nonwoven fabrics, the average fiber diameter and the void rate thereof mainly determine the filtration precision. Hence, hereinafter, when the fiber diameter of a melt-blown nonwoven fabric is mentioned, it is intended to indicate the average fiber diameter unless otherwise specified. When a melt-blown nonwoven fabric is employed, the average fiber diameter can be set to a value within a range of 0.5 to 40 $\mu$m depending on the selected spinning conditions.

Examples of the fibers used in the depth filter of the present invention include thermoplastic resins such as polypropylene, copolymerized polypropylene (for example, a bipolymer or a terpolymer containing ethylene, butene-1,4-methylpentene, and the like with propylene as a main component), polyethylene, polyamide, polyester, and low-melting point copolymerized polyester.

In the present invention, a nonwoven fabric, a web, or the like can be utilized as a fiber sheet. A fiber sheet is constituted of a mixture of a thermoplastic low-melting point resin and a thermoplastic high-melting point resin having a melting point difference of 10°C or greater. Regarding a method for mixing a low-melting point resin and a high-melting point resin, composite fibers of a low-melting point resin and a high-melting point resin may be used as constituent fibers of a nonwoven fabric or a web, fibers composed of a low-melting point resin and fibers composed of a high-melting point resin may be mixed in a spinning stage, or fibers composed of a low-melting point resin and fibers composed of a high-melting point resin may be mixed with cotton after spinning.

The mixing ratio of the low-melting point resin in the pre-filtration layer need only be 10 to 90 weight% with respect to the total amount of the low-melting point resin and the high-melting point resin, is preferably 20 to 70 weight%, and is more preferably 30 to 50 weight%. Particularly, it is preferable to be 30 to 50 weight% with respect to the total amount of the low-melting point resin and the high-melting point resin because the fiber sheet has excellent strength and portability/retainability when it is formed as a filter. If the content of the low-melting point resin is 10 weight% or more, the number of thermal bonding points of the fibers is not reduced even if a fibrous web is heat-treated, fluffing is small, and the strength is increased. In addition, if the content of the low-melting point resin is 90 weight% or less, the low-melting point resin which has lost its fiber form due to heat treatment is unlikely to partially block inter-fiber voids, widen the hole diameter, and cause deterioration in filtration ability of the filter. Examples of combinations of the low-melting point resin and the high-melting point resin include a combination of polyethylene and polypropylene, a combination of copolymerized polypropylene and polypropylene, a combination of low-melting point copolymerized polyester and polyester, and a combination of polyethylene and polyester. Among these, it is preferable to use a combination of copolymerized polypropylene and polypropylene or a combination of low-melting point copolymerized polyester and polyester because a bonding force between fibers due to heat treatment is strong so that a filter having a strength can be obtained.

Since fiber intersections in the layers of the depth filter of the present invention formed using a nonwoven fabric are firmly bonded, there is no crushing (compaction) of the filter medium due to rise in filtration pressure. Therefore, even if the amount of captured filtration objects increases over time, compaction does not occur, and thus filtration can be performed under conditions of gentle rise in pressure for a relatively long period of time.

In the depth filter of the present invention, when at least two kinds of thermoplastic resins having different melting points are used, a thermoplastic resin having the lowest melting point (which will hereinafter be referred to as a low-melting point resin) is used. Therefore, fibers containing the low-melting point resin are heat-fused to each other and firm inter-fiber voids are formed by heating a nonwoven fabric or a web after spinning by means of air-through heat treatment or a far-infrared heater, and thus stable filtration performance can be maintained. Air-through heat treatment using hot blast is a heat treatment method in which a conveyor belt or a rotary drum is provided in an oven, a bonding effect is enhanced by causing a web to pass therethrough and suctioning the web to one side, and a nonwoven fabric uniform in the thickness direction is obtained.

For example, the depth filter of the present invention can be manufactured by heating a nonwoven fabric or a web by means of air-through heat treatment, a far-infrared heater, or the like and winding it around a core material thereafter.

In the depth filter of the present invention, when composite fibers are used, the forms thereof are not particularly limited. However, it is possible to employ composite forms such as a concentric sheath-core type, an eccentric sheath-core type, a parallel-connected type, a sea-island type, and a radial type. Particularly, in order to impart bulkiness thereto, eccentric sheath-core type composite fibers are suitable.

In addition, in the depth filter of the present invention, as a nonwoven fabric, a mixed nonwoven fabric containing at least two kinds of fibers having different melting points may be used. In a case of a mixed nonwoven fabric, the kinds of fibers contained in the mixed nonwoven fabric need only be two or more kinds as long as the effects of the invention can be obtained. Three kinds, four kinds, or more kinds may be employed. However, when there are three or more kinds, for example, the chemical resistance is determined by the weakest of the three kinds. Therefore, it is preferable to use two kinds except when functional fibers or the like are mixed. For example, a nonwoven fabric containing two kinds of fibers having different melting points is composed of low-melting point fibers and high-melting point fibers, and a nonwoven fabric in which the intersections of the low-melting point fibers and the high-melting point fibers are heat-fused can be preferably utilized. It is preferable that the melting point difference between the low-melting point fibers and the high-melting point fibers be 10°C or greater. Regarding a nonwoven fabric, preferably, a combination in which the low-melting point fibers are composed of a propylene copolymer and the high-melting point fiber are composed of polypropylene can be presented as an example.

In production of a melt-blown nonwoven fabric, the kind of constituent fibers and the method for manufacturing a nonwoven fabric are not particularly limited, and known fibers and a manufacturing method can be used. For example, a melt-blown nonwoven fabric can be manufactured by performing melt extrusion of a thermoplastic resin, spinning the resin through a melt blowing spinneret, further blow-spinning the resin as flows of ultrafine fibers by means of high-temperature high-speed gas, collecting the ultrafine fibers as a web using a collection device, performing heat treatment of the obtained web, and heat-fusing the ultrafine fibers. Normally, air or inert gas such as nitrogen gas is used for high-temperature high-speed blowing airflows used in melt blowing spinning. Generally, a range of 200°C to 500°C is used for the temperature of gas, and a range of 3 to 120 kPa is used for the pressure. Regarding the blowing airflows, when air is used as gas, it may be referred to as blowing air.

<Method for manufacturing depth filter>

Specifically, for example, the depth filter of the present invention can be formed by winding a melt-blown nonwoven fabric around a columnar iron rod while performing heat-fusing.

In the foregoing method, the temperature of the columnar iron rod need only be a temperature at which a nonwoven fabric is melted and heat-fused. In addition, the speed of a manufacturing line is not particularly limited. However, when a filtration layer is formed, the tension applied to a nonwoven fabric is preferably 10 N/m or lower, and it is preferable to perform winding without applying any tension thereto.

The diameter and the thickness of the depth filter of the present invention can be suitably set in accordance with the intended performance or the properties of a filtration liquid. For example, in a case of a depth filter used for slurry filtration in a step of manufacturing a CMP slurry, the inner diameter is preferably set to approximately 23 to 100 mm. When the inner diameter is set to 23 mm or larger, the amount of liquid flowing to the inner wall side can be sufficiently secured. When the inner diameter is set to 100 mm or smaller, a compact depth filter can be realized. In addition, it is preferable that the thickness (=(outer diameter-inner diameter)/2) be 10 to 30 mm. When the thickness is set to 10 mm or larger, the change ratio of the average fiber diameter and the average weight per square meter can be sufficiently provided. When the thickness is set to 30 mm or shorter, a depth filter having excellent liquid permeability can be achieved.

A depth filter manufactured as described above is suitably used as a cylindrical depth filter by cutting it to have an appropriate size, attaching endcaps to both ends, and the like. In addition, it can also be used by being sealed in a small-sized capsule.

In addition, the foregoing manufacturing method is simply an overview, and known steps such as heat treatment, cooling, chemical treatment, molding, and washing can be performed as necessary in addition to the foregoing steps.

[Examples]

Hereinafter, the present invention will be described in more detail using Examples, but the present invention is not limited thereto.

Measuring methods and definitions of physical property values in Examples are as follows.

1) Method for measuring average fiber diameter

From a cross section of a filter imaged using an electron microscope, lengths (diameter) of 100 fibers in the length direction and the perpendicular direction were measured for each fiber, and the arithmetic mean value was taken as the average fiber diameter. This calculation was performed using image processing software "Scion Image" (brand name) of Scion Corporation.

2) Method for measuring weight per square meter

For a nonwoven fabric obtained by spinning, three measurement samples cut into a circular shape of 100 cm$^2$ were gathered in the width direction (left side, center, and right side), the weight of each sample was measured, the weight per unit area (g/m$^2$) was obtained, and the arithmetic mean value thereof was taken as the weight per square meter.

3) MFR of resin

In conformity with the method in K 7210-1:2014, a standard die was used, and measurement was performed under conditions of a temperature of 230°C and a load of 2.16 kg.

(Material)

As a high-melting point resin, SA08A (manufactured by Japan Polypropylene Corporation, MFR; 80 g/10 min, melting point of 165°C) was used, and as a low-melting point resin, SOW0279 (manufactured by Japan Polypropylene Corporation, MFR; 60 g/10 min, melting point of 140°C) was used.

[Example 1]

<Manufacturing of depth filter in which average fiber diameter ratio of pre-filtration layer and microfiltration layer was set to 10 times or greater and weight per square meter ratio is changed>

As a nozzle for melt blowing, a spinneret for melt blowing in which the spinning holes for discharging a high-melting point resin and the spinning holes for discharging a low-melting point resin (hole diameters of 0.3 mm) were alternately arranged in a row (501 holes in total) was used.
A web was obtained by setting the spinning temperature to 350°C, continuously changing the pressure of blowing air at a temperature of 400°C from 10 kPa in the initial stage to 99 kPa at the maximum and using the high-melting point resin and the low-melting point resin at the same time, setting the weight ratio of the two resins to 5:5, performing spinning under conditions of changing the discharging amount from 20 g/min to 120 g/min, performing blasting on a conveyor net with a suction device, and performing winding around a paper tube roll at 9 m/min.
At this time, when webs of parts corresponding to the pre-filtration layer and the microfiltration layer were gathered, the average fiber diameter of the web of the part which would serve as the pre-filtration layer was 48.3 μm, and the average weight per square meter thereof was 44.0 g/m$^2$. The average fiber diameter of the web of the part which would serve as the microfiltration layer was 1.77 μm, and the average weight per square meter was 10.1 g/m$^2$.
Next, the webs were heated using a far-infrared heater processing machine at a winding speed of 7.5 m/min in the order of first to third heating chambers while the first heating chamber was set to 100°C, the second heating chamber was set to 100°C, and the third heating chamber was set to 128°C as the set temperatures for the heating chambers. Immediately after this, the webs were wound around a core (iron rod) having an outer diameter of 30 mm in the order of the web used for the microfiltration layer and the web used for the pre-filtration layer. The obtained cylindrically formed article was left behind for cooling at room temperature and was taken out from the core material, both ends thereof were cut, and a cylindrical filter having an overall length of 247 mm, an outer diameter of 63 mm, and an inner diameter of 30 mm was thereby produced. The void rate was 68.7%.
Moreover, both end parts of the filter were sealed with a flat gasket (a polyethylene foam body having a foaming magnification of 3 times and a thickness of 3 mm was cut into a donut shape), and the overall length became 250 mm. The flat gasket and the filter were integrated by thermal bonding.

[Example 2]

<Manufacturing of depth filter in which average fiber diameter ratio of pre-filtration layer and microfiltration layer was set to 10 times or greater and weight per square meter ratio was changed>

As a nozzle for melt blowing, a spinneret for melt blowing in which the spinning holes for discharging a high-melting point resin and the spinning holes for discharging a low-melting point resin (hole diameters of 0.2 mm) were alternately arranged in a row (501 holes in total) was used.
A web was obtained by setting the spinning temperature to 360°C, continuously changing the pressure of blowing air at a temperature of 400°C from 13 kPa in the initial stage to 60 kPa at the maximum and using the high-melting point resin and the low-melting point resin at the same time, setting the weight ratio of the two resins to 5:5, performing spinning under conditions of changing the discharging amount from 20 g/min to 120 g/min, performing blasting on a conveyor net with a suction device, and performing winding around a paper tube roll at 9 m/min.

At this time, when webs of parts corresponding to the pre-filtration layer and the microfiltration layer were gathered, the average fiber diameter of the web of the part which would serve as the pre-filtration layer was 16.9 $\mu$m, and the average weight per square meter thereof was 48.9 g/m$^2$. The average fiber diameter of the web of the part which would serve as the microfiltration layer was 1.07 $\mu$m, and the average weight per square meter was 10.0 g/m$^2$.

Next, the webs were heated using a through-air processing machine under conditions of a conveyor speed of 8.5 m/min and a set temperature of 137°C. Immediately after this, the webs were wound around a core (iron rod) having an outer diameter of 30 mm in the order of the web used for the microfiltration layer and the web used for the pre-filtration layer. The obtained cylindrically formed article was left behind for cooling at room temperature and was taken out from the core material, both ends thereof were cut, and a cylindrical filter having an overall length of 245 mm, an outer diameter of 67 mm, and an inner diameter of 30 mm was thereby produced. The void rate was 75.2%.

Moreover, both end parts of the filter were sealed with a flat gasket (a polyethylene foam body having a foaming magnification of 3 times and a thickness of 3 mm was cut into a donut shape), and the overall length became 250 mm. The flat gasket and the filter were integrated by thermal bonding.

[Example 3]

<Manufacturing of depth filter in which average fiber diameter ratio of pre-filtration layer and microfiltration layer was set to 10 times or greater and weight per square meter ratio was set to 4.5 times or greater>

As a nozzle for melt blowing, a spinneret for melt blowing in which the spinning holes for discharging a high-melting point resin and the spinning holes for discharging a low-melting point resin (hole diameters of 0.2 mm) were alternately arranged in a row (501 holes in total) was used.

A web was obtained by setting the spinning temperature to 360°C, continuously changing the pressure of blowing air at a temperature of 400°C from 12.7 kPa in the initial stage to 107 kPa at the maximum and using the high-melting point resin and the low-melting point resin at the same time, setting the weight ratio of the two resins to 5:5, performing spinning under conditions of changing the discharging amount from 20 g/min to 120 g/min, performing blasting on a conveyor net with a suction device, and performing winding around a paper tube roll at 9 m/min.

At this time, when webs of parts corresponding to the pre-filtration layer and the microfiltration layer were gathered, the average fiber diameter of the web of the part which would serve as the pre-filtration layer was 14.0 $\mu$m, and the average weight per square meter thereof was 48.3 g/m$^2$. The average fiber diameter of the web of the part which would serve as the microfiltration layer was 1.37 $\mu$m, and the average weight per square meter was 10.6 g/m$^2$.

Next, the webs were heated using a through-air processing machine under conditions of a conveyor speed of 8.5 m/min and a set temperature of 135°C. Immediately after this, the webs were wound around a core (iron rod) having an outer diameter of 30 mm in the order of the web which would serve as the microfiltration layer and the web used for the pre-filtration layer. The obtained cylindrically formed article was left behind for cooling at room temperature and was taken out from the core material, both ends thereof were cut, and a cylindrical filter having an overall length of 247 mm, an outer diameter of 67 mm, and an inner diameter of 30 mm was thereby produced. The void rate was 76.7%.

Moreover, both end parts of the filter were sealed with a flat gasket (a polyethylene foam body having a foaming magnification of 3 times and a thickness of 3 mm was cut into a donut shape), and the overall length became 250 mm. The flat gasket and the filter were integrated by thermal bonding.

[Example 4]

<Manufacturing of depth filter in which average fiber diameter ratio of pre-filtration layer and microfiltration layer was set to 10 times or greater and weight per square meter ratio was set to 1.6 times or greater>

As a nozzle for melt blowing, a spinneret for melt blowing in which the spinning holes for discharging a high-melting point resin and the spinning holes for discharging a low-melting point resin (hole diameters of 0.2 mm) were alternately arranged in a row (501 holes in total) was used.

A web was obtained by setting the spinning temperature to 330°C, continuously changing the pressure of blowing air at a temperature of 400°C from 12 kPa in the initial stage to 130 kPa at the maximum and using the high-melting point resin and the low-melting point resin at the same time, setting the weight ratio of the two resins to 5:5, performing spinning under conditions of changing the discharging amount from 23 g/min to 44 g/min, performing blasting on a conveyor net with a suction device, and performing winding around a paper tube roll at 9 m/min.

At this time, when webs of parts corresponding to the pre-filtration layer and the microfiltration layer were gathered, the average fiber diameter of the web of the part which would serve as the pre-filtration layer was 11.04 $\mu$m, and the average weight per square meter thereof was 17.93 g/m$^2$. The average fiber diameter of the web of the part which would serve as the microfiltration layer was 1.07 $\mu$m, and the average weight per square meter was 11.2 g/m$^2$.

Next, the webs were heated using a through-air processing machine under conditions of a conveyor speed of 8.5 m/min and a set temperature of 137°C. Immediately after this, the webs were wound around a core (iron rod) having an outer diameter of 30 mm in the order of the web which would serve as the microfiltration layer and the web used for the pre-filtration layer. The obtained cylindrically formed article was left behind for cooling at room temperature and was taken out from the core material, both ends thereof were cut, and a cylindrical filter having an overall length of 245 mm, an outer diameter of 67 mm, and an inner diameter of 30 mm was thereby produced. The void rate was 74.3%.

Moreover, both end parts of the filter were sealed with a flat gasket (a polyethylene foam body having a foaming magnification of 3 times and a thickness of 3 mm was cut into a donut shape), and the overall length became 250 mm. The flat gasket and the filter were integrated by thermal bonding.

[Example 5]

<Manufacturing of depth filter in which average fiber diameter ratio of pre-filtration layer and microfiltration layer was 10 times or greater and weight per square meter ratio was 4.5 times or greater>

As a nozzle for melt blowing, a spinneret for melt blowing in which the spinning holes for discharging a high-melting point resin and the spinning holes for discharging a low-melting point resin (hole diameters of 0.3 mm) were alternately arranged in a row (501 holes in total) was used.

A web was obtained by setting the spinning temperature to 345°C, continuously changing the pressure of blowing air at a temperature of 400°C from 17.8 kPa in the initial stage to 86 kPa at the maximum and using the high-melting point resin and the low-melting point resin at the same time, setting the weight ratio of the two resins to 5:5, performing spinning under conditions of changing the discharging amount from 20 g/min to 120 g/min, performing blasting on a conveyor net with a suction device, and performing winding around a paper tube roll at 9 m/min.

At this time, when webs of parts corresponding to the pre-filtration layer and the microfiltration layer were gathered, the average fiber diameter of the web of the part which would serve as the pre-filtration layer was 14.8 $\mu$m, and the average weight per square meter thereof was 48.1 g/m$^2$. The average fiber diameter of the web of the part which would serve as the microfiltration layer was 1.09 $\mu$m, and the average weight per square meter was 10.3 g/m$^2$.

Next, the webs were heated using a through-air processing machine under conditions of a conveyor speed of 8.5 m/min and a set temperature of 135°C. Immediately after this, the webs were wound around a core (iron rod) having an outer diameter of 30 mm in the order of the web which would serve as the microfiltration layer and the web used for the pre-filtration layer. The obtained cylindrically formed article was left behind for cooling at room temperature and was taken out from the core material, both ends thereof were cut, and a cylindrical filter having an overall length of 247 mm, an outer diameter of 67 mm, and an inner diameter of 30 mm was thereby produced. The void rate was 76.7%.

Moreover, both end parts of the filter were sealed with a flat gasket (a polyethylene foam body having a foaming magnification of 3 times and a thickness of 3 mm was cut into a donut shape), and the overall length became 250 mm. The flat gasket and the filter were integrated by thermal bonding.

[Comparative Example 1]

<Manufacturing of depth filter in which average fiber diameter ratio of pre-filtration layer and microfiltration layer was set to 4 to 5 times and weight per square meter ratio was set to be uniform>

A web was obtained by setting the spinning temperature to 350°C, continuously changing the pressure of blowing air at a temperature of 400°C from 42 kPa in the initial stage to 114 kPa at the maximum, at the same time, performing spinning while the discharging amount was set to 100 g/min, performing blasting on a conveyor net with a suction device, and performing winding around a paper tube roll at 9 m/min.

At this time, when webs of parts corresponding to the pre-filtration layer and the microfiltration layer were gathered, the average fiber diameter of the web of the part which would serve as the pre-filtration layer was 8.30 $\mu$m, the average fiber diameter of the web of the part which would serve as the microfiltration layer was 1.70 $\mu$m, and the average weight per square meters of both the pre-filtration layer and the microfiltration layer were 52 g/m$^2$.

Next, the webs were heated using a through-air processing machine under conditions of a conveyor speed of 8.5 m/min and a set temperature of 137°C. Immediately after this, the webs were wound around a core (iron rod) having an outer diameter of 30 mm in the order of the web which would serve as the microfiltration layer and the web used for the pre-filtration layer. The obtained cylindrically formed article was left behind for cooling at room temperature and was taken out from the core material, both ends thereof were cut, and a cylindrical filter having an overall length of 245 mm, an outer diameter of 67 mm, and an inner diameter of 30 mm was thereby produced. The void rate was 74.3%.

Moreover, both end parts of the filter were sealed with a flat gasket (a polyethylene foam body having a foaming magnification of 3 times and a thickness of 3 mm was cut into a donut shape), and the overall length became 250 mm. A hotmelt bonding agent was used for bonding the flat gasket and the filter to each other.

[Comparative Example 2]

<Manufacturing of depth filter in which average fiber diameter ratio of pre-filtration layer and microfiltration layer was set to 7 to 8 times, weight per square meter ratio was set to be uniform, and consolidated insertion nonwoven fabric was used>

A web was obtained by setting the spinning temperature to 360°C, continuously changing the flow rate of blowing air at a temperature of 400°C from 5.2 $Nm^3$/h in the initial stage to 27 $Nm^3$/h at the maximum, at the same time, performing spinning while the discharging amount was set to 109 g/min, performing blasting on a conveyor net with a suction device, and performing winding around a paper tube roll at 7.5 m/min.

At this time, when webs of parts corresponding to the pre-filtration layer and the microfiltration layer were gathered, the average fiber diameter of the web of the part which would serve as the pre-filtration layer was 15.00 $\mu$m, the average fiber diameter of the web of the part which would serve as the microfiltration layer was 2.00 $\mu$m, and the average weight per square meters of both the pre-filtration layer and the microfiltration layer were 50 $g/m^2$.

In addition, as an insertion nonwoven fabric, a polypropylene melt-blown nonwoven fabric having a weight per square meter of 75 $g/m^2$, a thickness of 500 $\mu$m, and an average fiber diameter of 1 $\mu$m was manufactured. It was consolidated using a flat roll at a temperature of 120°C, and a consolidated insertion nonwoven fabric having a weight per square meter of 75 $g/m^2$, a thickness of 200 $\mu$m, and an average fiber diameter of 1 $\mu$m was thereby manufactured.

Next, the webs were heated using a through-air processing machine under conditions of a conveyor speed of 8.5 m/min and a set temperature of 137°C. Immediately after this, the webs were wound around a core (iron rod) having an outer diameter of 30 mm in the order of the consolidated insertion nonwoven fabric, the web which would serve as the microfiltration layer, and the web used for the pre-filtration layer. The obtained cylindrically formed article was left behind for cooling at room temperature and was taken out from the core material, both ends thereof were cut, and a cylindrical filter having an overall length of 245 mm, an outer diameter of 67 mm, and an inner diameter of 30 mm was thereby produced. The void rate was 74.3%.

Moreover, both end parts of the filter were sealed with a flat gasket (a polyethylene foam body having a foaming magnification of 3 times and a thickness of 3 mm was cut into a donut shape), and the overall length became 250 mm. A hotmelt bonding agent was used for bonding the flat gasket and the filter to each other.

(Filtration performance evaluation)

As described above, a filtration performance test was performed for the cylindrical filters obtained in Examples 1 to 5 and Comparative Examples 1 to 2. The result of each test will be described below.

<Water permeability>

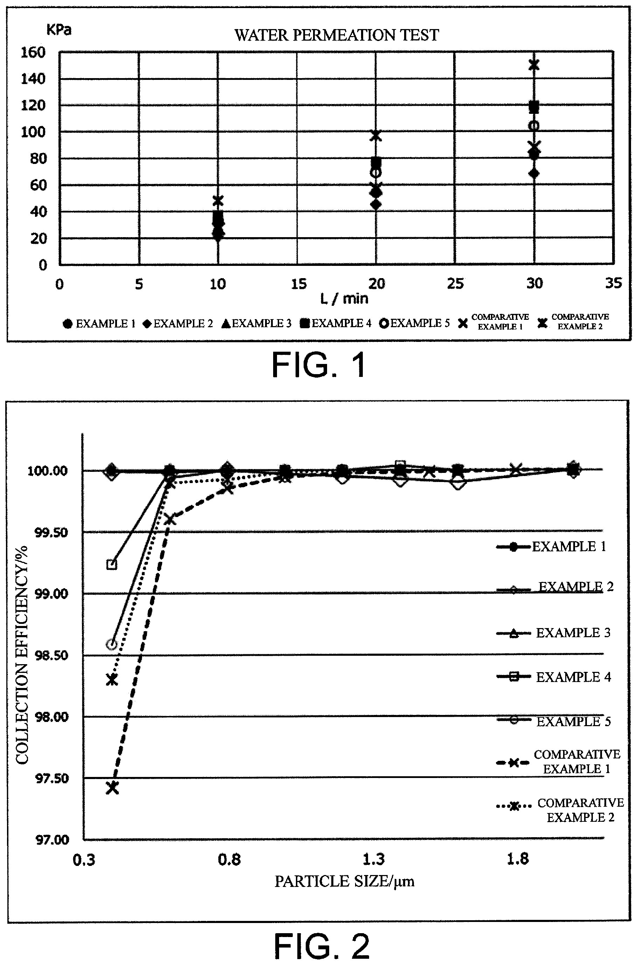

First, water permeation was performed without mounting a filter in a filter housing, a relationship between the amount of water permeation and pressure losses before and after the housing was obtained, and the values thereof were taken as a pipe resistance. Next, regarding a filter, a filter (test body) was mounted in the housing, the amount of water permeation and pressure losses before and after the housing were obtained, and the values thereof were taken as temporary pressure losses. Further, the value obtained by subtracting the pipe resistance from the temporary pressure loss was taken as a true differential pressure of the test body. Water permeation was performed at flow speeds of 10 L/min, 20 L/min, and 30 L/min. Fig. 1 shows the results.

<Collection efficiency>

For the cylindrical filters of Examples 1 to 5 and Comparative Examples 1 to 2, collection efficiency was measured as initial collection performance in conformity with the test powder and the method described below.

The test powder used was Fine of AC dust (ACFTD: abbreviation of Air Cleaner Fine Test Dust, which is fine particles manufactured from desert sand) obtained from the Association of Powder Process Industry and Engineering, JAPAN.

The filter was mounted in a filtration tester, water permeation was performed for 30 minutes, and the background was measured thereafter.

A test fluid in which the ACFTD was adjusted to have a concentration of 0.037 g/L with water was fed to a tank of the filtration tester at a speed of 0.3 g/min for 5 minutes, and the inside of the tank was stirred. The test fluid in the tank was caused to pass through the filter in the filtration tester at a flow rate of 10 L/min, and the numbers of particles before and after the filter were measured (reference literature: Filter Guidebook for User, the Association of Liquid Filtration and Purification Industry).

The numbers of particles were measured using a particle sensor (KS-42B, manufactured by Rion Co., Ltd.) and a particle counter (KE-40B, manufactured by Rion Co., Ltd.).

The collection efficiency was obtained by the following definitional equation.

$$\text{Collection efficiency (\%)} = (1 - \text{number of particles having particle size of x } \mu\text{m}$$

$$\text{after passing through filter/number of particles having particle size of x } \mu\text{m before}$$

$$\text{passing through filter}) \times 100$$

Fig. 2 shows the measurement results of the collection efficiency.

<Change in differential pressure and filtration precision over time according to increase in amount of added fine particles>

For the cylindrical filters of Examples 1 to 5 and Comparative Examples 1 to 2, the collection efficiency was successively measured until the filtration pressure reached 150 KPa in conformity with the test powder and the method described below.

The test powder used was the ACFTD.

The filter was mounted in the filtration tester, and water permeation was performed at a speed of 10 L/min for 30 minutes.

30L of pure water was input to the tank of the filtration tester, the ACFTD was continuously added thereto at a speed of 0.5 g/min while stirring the mixture with a stirring blade, and the mixture was subjected to liquid permeation at a speed of 10 L/min inside the filtration tester mounted with the filter. Liquid permeation and addition of the ACFTD were performed until the differential pressure between an entrance pressure and an exit pressure reached 150 kPa. During that time, the fluid was gathered from the entrance side and the exit side of the filter at any time, and they were used as samples.

For the obtained samples, the numbers of particles before and after the filter were measured at each addition time using AccuSizer 780APS (manufactured by PSS JAPAN Co., Ltd.). The ACFTD before filtration included particle sizes of 0.5 $\mu$m to 31 $\mu$m and had a particle size distribution in which the median diameter of the number standard was 0.71 $\mu$m and the mode diameter was 0.6 $\mu$m. It was ascertained that the fluid used as the sample had a particle size distribution width.

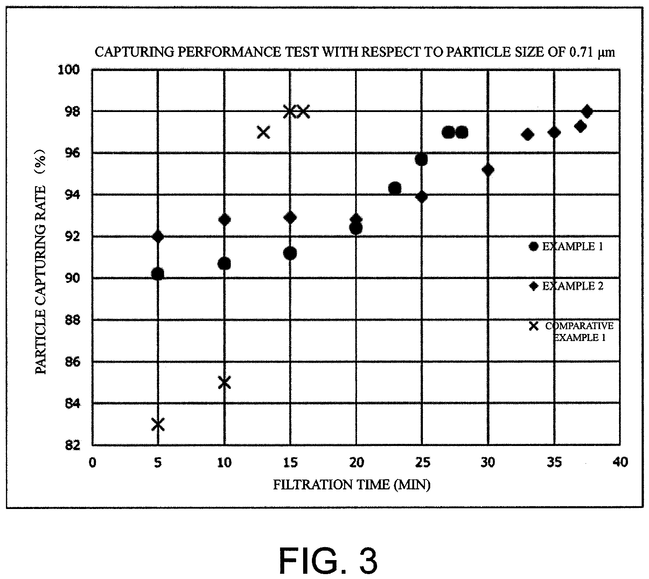

For Examples 1 and 2 and Comparative Example 1, Fig. 3 shows the results of particle capturing rates at each filtration time with respect to the particle size of 0.71 $\mu$m.

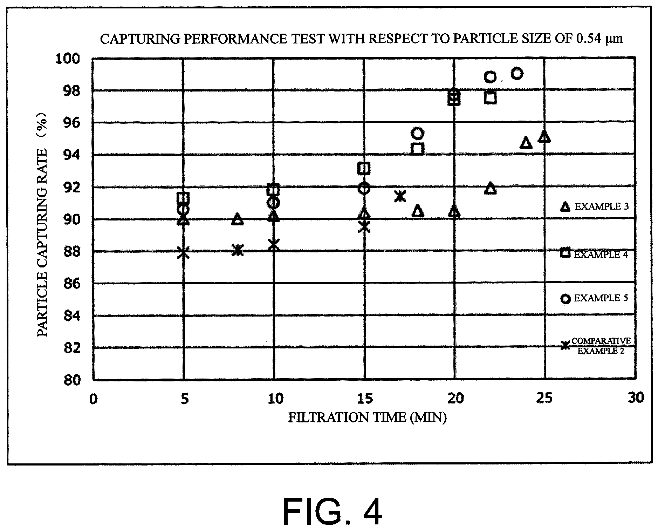

For Example 3, 4, 5 and Comparative Example 2, Fig. 4 shows the results of particle capturing rates at each filtration time with respect to the particle size of 0.54 $\mu$m.

From the results of the filtration performance test shown in Fig. 2, it was ascertained that the depth filters of the present invention in Examples 1 to 5 had higher particles capturing with respect to fine particles than those of Comparative Examples 1 and 2.

From the results in Fig. 3, in Comparative Example 1, there was a section in which the particle capturing rate with respect to 0.71 $\mu$m was lower than 90%, and the filtration time was 16 minutes at most. In contrast, in Examples 1 and 2, high particle capturing rates such as 90% were exhibited in the all sections, and the filters had an extremely long filtration service life.

Meanwhile, from the results in Fig. 4, in Comparative Example 2, the particle capturing rate with respect to 0.54 $\mu$m was lower than 90%, and the filtration time was 17 minutes, which was short. In contrast, in Examples 3, 4, and 5, it was ascertained that high particle capturing performance such as a particle capturing rate of 90% or higher was exhibited in all sections and the filters also had a long filtration service life.

From the foregoing results, it was ascertained that the fiber diameter gradient between the pre-filtration layer and the microfiltration layer was significant, when the depth filter of the present invention having a large weight per square meter ratio was used, compared to the filters of Comparative Examples, clogging is less likely to occur even if fine particles having a particle size distribution width containing coarse particles were continuously added thereto, and particles having particle sizes or larger and to be removed during filtration could be filtered at a high particle capturing rate such as 90% or higher for a long period of time. In addition, it could also be confirmed that as the filtration pressure increased, the outflow of coarse particles to the filtrate side did not increase.

From the foregoing results, it was ascertained that in the test powder containing coarse particles, during filtration of finer particles contained in the test powder, when the depth filter of the present invention was used, compared to the filters of Comparative Examples, filtration could be performed for a long period of time while the high particle capturing rate was maintained.

As a reason for the excellent filtration performance exhibited by the depth filter of the present invention with respect to filtration of liquids containing fine particles, it is assumed that since the depth filter has a structure of continuous voids which are formed by heat fusion of a nonwoven fabric in which the average fiber diameter continuously decreases from the pre-filtration layer toward the microfiltration layer and the average weight per square meter continuously decreases, a filtrate smoothly flows, the pore structure thereof also functions as an appropriate sieve, and depth filtration has been efficiently performed throughout the filter medium in its entirety.

In addition, as a reason for stable filtration which has been able to be realized in all sections during filtration, it is conceivable that the high-melting point fiber and the low-melting point fiber of the nonwoven fabric are moderately heat-fused so that the holes of the filter medium are unlikely to be widened even under a high pressure. Therefore, in the depth filter of the present invention, even if the filtration pressure rises, there is no increase in leakage of coarse particles, and the particle capturing performance can be retained for a long period of time.

The filter having such a filtration performance is suitable for microfiltration of liquid materials containing coarse particles and having a wide particle size distribution as in the experiment described above.

**Claims**

1. A depth filter which is obtained by winding a fiber sheet into a cylinder, and which comprises a pre-filtration layer and a microfiltration layer,

   wherein the pre-filtration layer and the microfiltration layer are formed of a fiber sheet,
   wherein the fiber sheet is composed of a nonwoven fabric or a web, and
   wherein the average fiber diameter of the fiber sheet continuously decreases from the pre-filtration layer toward the microfiltration layer, and the average weight per square meter of the fiber sheet continuously decreases from the pre-filtration layer toward the microfiltration layer.

2. The depth filter according to claim 1,
   wherein the pre-filtration layer is disposed in an outermost circumferential part of the cylinder, the microfiltration layer is disposed in an inner circumferential part of the cylinder, the average weights per square meter of the fiber sheets of the pre-filtration layer and the microfiltration layer continuously decrease, and the average fiber diameter ratios between the fiber sheets of the pre-filtration layer and the microfiltration layer are five times or greater.

3. The depth filter according to claim 2,
   wherein a support layer is disposed closer to the inner circumferential part than the microfiltration layer.

4. The depth filter according to any one of claims 1 to 3,
   wherein the average fiber diameter of the pre-filtration layer is 5 to 100 $\mu$m, and the average fiber diameter of the microfiltration layer is 0.1 to 10 $\mu$m.

5. The depth filter according to any one of claims 1 to 4,
   wherein a fiber sheet having a weight per square meter of 20 g/m$^2$ or smaller is included.

6. The depth filter according to any one of claims 1 to 5,
   wherein the fiber sheet is composed of a nonwoven fabric, the nonwoven fabric is composed of a low-melting point fiber and a high-melting point fiber, and an intersection between the low-melting point fiber and the high-melting point fiber is heat-fused.

7. The depth filter according to claim 6,
   wherein a melting point difference between the low-melting point fiber and the high-melting point fiber is 10°C or greater, the low-melting point fiber is composed of a propylene copolymer, and the high-melting point fiber is composed of polypropylene.

8. The depth filter according to any one of claims 1 to 7,
   wherein the fiber sheet is heat-fused between layers of the fiber sheet.

9. The depth filter according to claim 3,

wherein the weight per square meter and the fiber diameter sequentially decrease from the outermost circumferential part toward the microfiltration layer and sequentially increase along a central part from the microfiltration layer.

FIG. 1

FIG. 2

FIG. 3

FIG. 4

**INTERNATIONAL SEARCH REPORT**

| International application No. |
| --- |
| PCT/JP2021/014341 |

## A. CLASSIFICATION OF SUBJECT MATTER
Int.Cl. B01D39/16(2006.01)i, B01D29/07(2006.01)i, B01D29/21(2006.01)i,
D04H1/541(2012.01)i
FI: B01D39/16D, B01D39/16A, B01D29/06520F, D04H1/541
According to International Patent Classification (IPC) or to both national classification and IPC

## B. FIELDS SEARCHED
Minimum documentation searched (classification system followed by classification symbols)
Int.Cl. B01D39/16, B01D29/07, B01D29/21, D04H1/541

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 11-156125 A (ROKI TECHNO CO., LTD.) 15 June 1999 (1999-06-15), claims 1-4, paragraphs [0012]-[0015], [0025]-[0031], [0039], [0043], [0044], [0052]-[0055], fig. 1, 2 | 1-5<br>6-9 |
| Y | JP 2017-185422 A (JNC CORPORATION) 12 October 2017 (2017-10-12), claim 1, paragraphs [0042], [0050], example 1 | 6-8 |
| Y | JP 2015-45114 A (JNC CORPORATION) 12 March 2015 (2015-03-12), paragraphs [0043]-[0049] | 8 |
| Y | JP 11-36169 A (TOUNEN TAPIRUSU KK) 09 February 1999 (1999-02-09), claims 1-3, paragraphs [0011], [0021] | 9 |

☒ Further documents are listed in the continuation of Box C.     ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>01 June 2021 | Date of mailing of the international search report<br>15 June 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2021/014341 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 8-309124 A (TOYOBO CO., LTD.) 26 November 1996 (1996-11-26) | 1-9 |
| A | JP 2015-93259 A (DAIWABO HOLDINGS CO., LTD.) 18 May 2015 (2015-05-18) | 1-9 |
| A | JP 1-297113 A (TOYO ROSHI KAISHA LTD.) 30 November 1989 (1989-11-30) | 1-9 |

Form PCT/ISA/210 (second sheet) (January 2015)

**INTERNATIONAL SEARCH REPORT**
Information on patent family members

International application No.

PCT/JP2021/014341

| JP 11-156125 A | 15 June 1999 | (Family: none) |
|---|---|---|
| JP 2017-185422 A | 12 October 2017 | (Family: none) |
| JP 2015-45114 A | 12 March 2015 | (Family: none) |
| JP 11-36169 A | 09 February 1999 | (Family: none) |
| JP 8-309124 A | 26 November 1996 | (Family: none) |
| JP 2015-93259 A | 18 May 2015 | (Family: none) |
| JP 1-297113 A | 30 November 1989 | (Family: none) |

Form PCT/ISA/210 (patent family annex) (January 2015)

**EP 4 144 427 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1998013123 A